Europäisches Patentamt

European Patent Office

Office européen des brevets

(19)

(11) Publication number: **0 331 495**
**A1**

## EUROPEAN PATENT APPLICATION

(12)

(21) Application number: **89302095.8**

(22) Date of filing: **02.03.89**

(51) Int. Cl.⁴: **A 01 N 43/70**
**//(A01N43/70,43:56,37:26,
37:22)**

(30) Priority: **04.03.88 US 164144**

(43) Date of publication of application:
**06.09.89 Bulletin 89/36**

(84) Designated Contracting States:
**AT BE CH DE ES FR GB GR IT LI NL SE**

(71) Applicant: **ELI LILLY AND COMPANY**
**Lilly Corporate Center**
**Indianapolis Indiana 46285 (US)**

(72) Inventor: **Burnside, Kermit Ray**
**892 South 775 East**
**Greenfield Indiana 46140 (US)**

**Chamberlain, Henry Eugene**
**3419 East 69th Street**
**Indianapolis Indiana 46220 (US)**

**Edmondson, John Byron**
**8548 Tidewater Drive**
**Indianapolis Indiana 46236 (US)**

(74) Representative: **Tapping, Kenneth George et al**
**Erl Wood Manor**
**Windlesham Surrey, GU20 6PH (GB)**

(54) **Herbicide combination.**

(57) The present invention is directed to an improved herbicide,
comprising a combination of three individual herbicides,
5-cyano-1-(1,1-dimethylethyl)-N-methyl-1H-pyrazole-4-carbox-
amide; atrazine or cyanazine; and alachlor or metolachlor.

EP 0 331 495 A1

**Description**

## HERBICIDE COMBINATION

The present invention is directed to an improved herbicide, comprising a combination of three individual herbicides. This combination can be used on any of a number of crops, but is especially suited for use on corn.

Corn is a major crop in the United States, and many herbicides have been developed for use on the crop. However, none is entirely satisfactory. Some present carryover problems, injuring rotation crops planted in subsequent years. Recently there has been concern over the contamination of ground water by certain corn herbicides. Resistance can also become a problem from continued use of the same herbicides. Therefore, there is an ongoing need to develop improved herbicides for this very important crop.

The present combination provides superior control of weeds with no crop injury and no carryover problems, and additionally it minimizes the total amount of herbicide being applied to cropland. It therefore represents an advance over known herbicides in the farmer's arsenal of weed control techniques.

The present improved herbicide comprises a combination of three compounds already known as herbicides.

The first compound is 5-cyano-1-(1,1-dimethylethyl)-N-methyl-1H-pyrazole-4-carboxamide. This compound is taught in 4,589,905, which is hereby incorporated by reference. The compound has also been announced at the 1987 meeting of the Weed Science Society of America, meeting February 3-5, 1987, at St. Louis, Missouri, and at the 1987 British Crop Protection Conference, meeting November 17, 1987, at Brighton, England. In these two presentations to the weed science community, it was referred to as EL-177, and it will be identified herein by the same code.

The second compound of the present combinations is one (or both) of atrazine and cyanazine. These compounds are known as herbicides, and are already widely used on corn. See The Pesticide Manual (The British Crop Protection Council, 1983), pages 23 and 140.

The third compound of the present combinations is one (or both) of alachlor or metolachlor. Again, these compounds are known as herbicides, and are already widely used on corn. See The Pesticide Manual, supra, pages 90 and 377.

Like many other herbicide products, the present combinations can be used for selective weed control, or, at higher rates, for nonselective vegetation control. However, the preferred use is for selective weed control in crops such as corn, sorghum, peanuts, soybeans, sugar cane, cotton, and the like. The preferred crop is corn, and the present combinations are preferably applied preemergent or early postemergent.

General use recommendations for the four commercially available compounds, when used individually, are as follows:
atrazine - 2 to 3 lbs./acre
cyanazine - 1.17 to 4.77 lbs./acre
alachlor - 2 to 4 lbs./acre
metolachlor - 2 to 3 lbs./acre
In accordance with the present invention, these individual use rates can be reduced considerably, such as to one-third or one-fourth the individual use rates, while still achieving superior weed control.

Specific use rates for the present combinations will of course vary with the type of soil, the particular compounds used, and the like, as is true of all herbicides. All that is required is that the amounts of the three compounds, in combination, exhibit herbicidal action. However, in general, the following ranges of rates have been found to be satisfactory:
EL-177 - 0.1 to 0.5 lb./acre (0.112 to 0.56 kgs./hectare)
atrazine - 0.5 to 1.5 lbs./acre (0.56 to 1.68 kgs./hectare)
cyanazine - 0.25 to 1.5 lbs./acre (0.28 to 1.68 kgs./hectare)
alachlor - 0.25 to 1.5 lbs./acre (0.28 to 1.68 kgs./hectare)
metolachlor - 0.1 to 1.5 lb./acre (0.112 to 1.68 kgs./hectare)

The present three-way combination can be achieved by tank mixing individually-formulated materials, or by using a "prepack" containing all three components. The advantages of the present invention could also be achieved by applying the three components separately (but approximately simultaneously) in individual passes through the field, but this would be highly inefficient. The most preferred technique is a three-way prepack, which allows the farmer to achieve the advantages of the present invention by mixing a single formulation into his spray tank.

Accordingly, another embodiment of the present invention is a formulation comprising each of EL-177, atrazine or cyanazine (or both), and alachlor or metolachlor (or both), with one or more suitable physiologically acceptable carriers. The carriers are selected in accordance with conventional agricultural formulation techniques, and the entire panoply of agricultural formulation techniques is available. Typical carriers include solvents, surfactants, dispersing agents, and the like. 4,589,905, previously referred to, describes not only EL-177, but also techniques for formulating it and other members of the series. It will be apparent to those skilled in the art that the techniques described in 4,589,905, are equally relevant to the present combinations.

The concentration of the active ingredients in accordance with the present invention is not critical, since a larger volume of a dilute formulation can be used, or a lesser volume of a more concentrated formulation. In general, preferred combinations will contain from 0.5 to 12% of EL-177, from 0.15 to 36% of atrazine or cyanazine (or both), and from 0.15 to 36% of alachlor or metolachlor (or both). These compositions can be used as such or, in the customary practice, can be diluted for use.

Combinations of the present invention were evaluated in three greenhouse experiments. The first experiment, Table I below, was of the combination of EL-177 with atrazine and alachlor. The second experiment, Table II below, was of the combination of EL-177 with either atrazine or cyanazine and alachlor. The third experiment, Table III below, was of the combination of EL-177 with cyanazine and alachlor. The first experiment utilized three replicates per treatment, the second and third experiments utilized two replicates per treatment. In all other respects, the experiments were conducted identically, as follows.

Greenhouse flats were filled with sterilized greenhouse mineral soil mix and planted with seeds of field corn, pigweed, velvetleaf, foxtail millet, and morningglory. Each compound was applied in a separate formulation. Commercially available formulations of atrazine, cyanazine, and alachlor were used, and an 80% wettable powder formulation of EL-177 was used (the same 80 WP formulation described below for the field tests).

After application of the respective compound(s), the flats were maintained under good greenhouse growing conditions, with 14-hour day length and a temperature range of 68-90° F., with periodic sprinkler irrigation through emergence, and subirrigation thereafter for the duration of the experiment. Ratings were made at 14-19 days after application for the control of weeds and crop injury. In the second experiment, crop root injury was rated only for the highest rate (since the first experiment had established that minimal crop injury occurred at the lower rates), and no crop root injury ratings were made at any rate in the third experiment.

Results are as set forth in the following tables.

TABLE I

Experiment 46587001

| | | % - INJURY | | | | | | |
|---|---|---|---|---|---|---|---|---|
| | RATE | CORN | | PIG | VELVET | FOXTAIL | MORNING | AVE* |
| TREATMENT | LB/A | TOP | ROOT | WEED | LEAF | MILLET | GLORY | CON |
| EL-177 | 0.095 | 0 | 17 | 77 | 50 | 30 | 17 | 43 |
| | 0.125 | 0 | 7 | 80 | 65 | 37 | 77 | 65 |
| | 0.19 | 0 | 13 | 100 | 95 | 72 | 93 | 90 |
| | 0.25 | 0 | 0 | 100 | 97 | 82 | 83 | 90 |
| alachlor | 0.25 | 0 | 0 | 73 | 33 | 99 | 0 | 51 |
| | 0.38 | 0 | 0 | 78 | 20 | 100 | 0 | 50 |
| atrazine | 0.25 | 0 | 0 | 99 | 0 | 0 | 10 | 27 |
| | 0.38 | 0 | 0 | 100 | 27 | 0 | 77 | 51 |
| EL-177 + | 0.095 + 0.25 | 0 | 0 | 93 | 70 | 99 | 86 | 87 |
| alachlor | 0.095 + 0.38 | 0 | 10 | 97 | 73 | 98 | 94 | 90 |
| | 0.125 + 0.25 | 0 | 0 | 86 | 67 | 100 | 56 | 77 |
| | 0.125 + 0.38 | 0 | 0 | 96 | 65 | 99 | 43 | 76 |
| | 0.19 + 0.25 | 0 | 0 | 99 | 65 | 100 | 78 | 86 |
| | 0.19 + 0.38 | 0 | 3 | 100 | 85 | 100 | 82 | 69 |
| | 0.25 + 0.25 | 0 | 0 | 100 | 93 | 100 | 93 | 96 |
| | 0.25 + 0.38 | 0 | 7 | 100 | 98 | 100 | 95 | 98 |

Experiment 46587001

TABLE I continued

% - INJURY

| TREATMENT | RATE LB/A | CORN | | PIG | VELVET | FOXTAIL | MORNING | AVE* |
| | | TOP | ROOT | WEED | LEAF | MILLET | GLORY | CON |
|---|---|---|---|---|---|---|---|---|
| EL-177 + | 0.095 + 0.25 | 0 | 0 | 100 | 89 | 20 | 78 | 72 |
| atrazine | 0.095 + 0.38 | 0 | 3 | 100 | 93 | 50 | 95 | 84 |
| | 0.125 + 0.25 | 0 | 0 | 100 | 98 | 40 | 96 | 84 |
| | 0.125 + 0.38 | 0 | 0 | 100 | 100 | 50 | 99 | 87 |
| | 0.19 + 0.25 | 0 | 20 | 100 | 99 | 50 | 99 | 87 |
| | 0.19 + 0.38 | 0 | 27 | 100 | 99 | 80 | 100 | 95 |
| | 0.25 + 0.25 | 0 | 23 | 100 | 100 | 93 | 96 | 97 |
| | 0.25 + 0.38 | 0 | 43 | 100 | 100 | 89 | 100 | 97 |
| alachlor + | 0.25 + 0.25 | 0 | 13 | 100 | 43 | 100 | 20 | 66 |
| atrazine | 0.38 + 0.38 | 6 | 27 | 100 | 100 | 100 | 100 | 100 |

EP 0 331 495 A1

TABLE I continued

Experiment 46587001

| | | % - INJURY | | | | | | |
| TREATMENT | RATE LB/A | CORN TOP | CORN ROOT | PIG WEED | VELVET LEAF | FOXTAIL MILLET | MORNING GLORY | AVE* CON |
|---|---|---|---|---|---|---|---|---|
| EL-177 + alachlor + atrazine | 0.095 + 0.25 + 0.25 | 0 | 7 | 100 | 93 | 100 | 86 | 95 |
| | 0.095 + 0.38 + 0.38 | 0 | 0 | 100 | 98 | 100 | 98 | 99 |
| | 0.125 + 0.25 + 0.25 | 0 | 0 | 100 | 95 | 99 | 84 | 94 |
| | 0.125 + 0.38 + 0.38 | 0 | 3 | 100 | 99 | 100 | 99 | 100 |
| | 0.19 + 0.25 + 0.25 | 3 | 17 | 100 | 97 | 100 | 96 | 98 |
| | 0.19 + 0.38 + 0.38 | 0 | 0 | 100 | 99 | 100 | 99 | 100 |
| | 0.25 + 0.25 + 0.25 | 0 | 3 | 100 | 100 | 100 | 99 | 100 |
| | 0.25 + 0.38 + 0.38 | 0 | 13 | 100 | 100 | 100 | 99 | 100 |

Notes
(1) Data is average of three replications
(2) Applications top watered through two days after emergence (approx 1" water) then subirrigated as needed
(3) Greenhouse mineral soil mix used
* Average weed control across the four species (pigweed, velvetleaf, foxtail millet, and morningglory)

TABLE II

Experiment 46587002

| | | % - INJURY | | | | | | |
|---|---|---|---|---|---|---|---|---|
| TREATMENT | RATE LB/A | CORN TOP | ROOT | PIG WEED | VELVET LEAF | FOXTAIL MILLET | MORNING GLORY | AVE* CON |
| EL-177 | 0.125 | 0 | - | 98 | 94 | 23 | 5 | 55 |
| | 0.15 | 0 | 25 | 96 | 93 | 30 | 10 | 57 |
| alachlor | 0.1 | 0 | - | 90 | 25 | 99 | 30 | 61 |
| | 0.15 | 0 | - | 89 | 30 | 99 | 0 | 55 |
| | 0.2 | 0 | 0 | 86 | 20 | 99 | 0 | 51 |
| atrazine | 0.25 | 0 | - | 98 | 20 | 20 | 5 | 41 |
| | 0.38 | 0 | 20 | 100 | 20 | 20 | 25 | 41 |
| cyanazine | 0.2 | 0 | 45 | 63 | 55 | 5 | 20 | 36 |
| EL-177 + alachlor | 0.125 + 0.1 | 0 | - | 100 | 98 | 98 | 43 | 85 |
| | 0.125 + 0.15 | 0 | - | 100 | 89 | 99 | 55 | 86 |
| | 0.125 + 0.2 | 0 | - | 100 | 80 | 99 | 30 | 77 |
| | 0.15 + 0.1 | 0 | - | 100 | 85 | 99 | 40 | 81 |
| | 0.15 + 0.15 | 0 | - | 100 | 92 | 99 | 35 | 82 |
| | 0.15 + 0.2 | 0 | 15 | 100 | 89 | 98 | 40 | 82 |
| EL-177 + atrazine | 0.125 + 0.25 | 0 | - | 100 | 92 | 30 | 65 | 72 |
| | 0.125 + 0.38 | 0 | - | 100 | 85 | 30 | 70 | 71 |
| | 0.15 + 0.25 | 0 | - | 100 | 99 | 55 | 92 | 86 |
| | 0.15 + 0.38 | 0 | 5 | 100 | 100 | 60 | 99 | 90 |

EP 0 331 495 A1

TABLE II continued

Experiment 46587002

| | | | % - INJURY | | | | | |
|---|---|---|---|---|---|---|---|---|
| | | | CORN | | PIG | VELVET | FOXTAIL | MORNING | AVE* |
| TREATMENT | RATE LB/A | | TOP | ROOT | WEED | LEAF | MILLET | GLORY | CON |
| EL-177 + cyanazine | 0.125 + 0.2 | | 0 | - | 100 | 100 | 30 | 97 | 82 |
| | 0.15 + 0.2 | | 0 | 18 | 98 | 100 | 40 | 98 | 84 |
| alachlor + atrazine | 0.1 + 0.25 | | 0 | - | 99 | 91 | 98 | 25 | 78 |
| | 0.15 + 0.25 | | 0 | - | 100 | 73 | 98 | 45 | 79 |
| | 0.2 + 0.25 | | 0 | - | 100 | 50 | 100 | 25 | 69 |
| | 0.1 + 0.38 | | 0 | - | 100 | 68 | 84 | 35 | 72 |
| | 0.15 + 0.38 | | 0 | - | 100 | 60 | 98 | 55 | 78 |
| | 0.2 + 0.38 | | 0 | 0 | 100 | 70 | 100 | 68 | 84 |
| alachlor + cyanazine | 0.1 + 0.2 | | 0 | - | 100 | 55 | 99 | 35 | 72 |
| | 0.15 + 0.2 | | 0 | 5 | 100 | 45 | 94 | 10 | 68 |

8

TABLE II continued

Experiment 46587002

| | RATE | % - INJURY | | | | | | |
|---|---|---|---|---|---|---|---|---|
| | | CORN | | PIG | VELVET | FOXTAIL | MORNING | AVE* |
| TREATMENT | LB/A | TOP | ROOT | WEED | LEAF | MILLET | GLORY | CON |
| EL-177 + | 0.125 + 0.1 + 0.38 | 0 | - | 100 | 100 | 100 | 60 | 90 |
| alachlor + | 0.125 + 0.15 + 0.38 | 0 | - | 100 | 100 | 100 | 73 | 93 |
| atrazine | 0.125 + 0.2 + 0.38 | 0 | - | 100 | 100 | 100 | 95 | 99 |
| | 0.15 + 0.1 + 0.25 | 0 | - | 100 | 100 | 100 | 83 | 96 |
| | 0.15 + 0.15 + 0.25 | 0 | - | 100 | 100 | 100 | 87 | 96 |
| | 0.15 + 0.2 + 0.25 | 0 | 25 | 100 | 100 | 100 | 99 | 100 |
| | 0.15 + 0.1 + 0.38 | 0 | - | 100 | 100 | 99 | 85 | 96 |
| | 0.15 + 0.15 + 0.38 | 0 | - | 100 | 99 | 99 | 73 | 93 |
| | 0.15 + 0.2 + 0.38 | 0 | 20 | 100 | 100 | 100 | 88 | 97 |
| | 0.125 + 0.25 + 0.38 | 0 | 5 | 100 | 100 | 100 | 94 | 98 |

EP 0 331 495 A1

TABLE II continued

Experiment 46587002

| TREATMENT | RATE LB/A | % - INJURY | | | | | | |
|---|---|---|---|---|---|---|---|---|
| | | CORN | | PIG | VELVET | FOXTAIL | MORNING | AVE* |
| | | TOP | ROOT | WEED | LEAF | MILLET | GLORY | CON |
| EL-177 + | 0.125 + 0.1 + 0.2 | 0 | - | 100 | 100 | 100 | 96 | 99 |
| alachlor + | 0.125 + 0.15 + 0.2 | 0 | 20 | 100 | 99 | 100 | 93 | 98 |
| cyanazine | | | | | | | | |

Notes (1) Data is average of two replications
(2) Applications top watered through two days after emergence (approx 1" water) then subirrigated as needed
(3) Greenhouse mineral soil mix used
* Average weed control across the four species (pigweed, velvetleaf, foxtail millet, and morningglory)
- Not evaluated

TABLE III

Experiment 46587003

| TREATMENT | RATE LB/A | % - INJURY | | | | | |
|---|---|---|---|---|---|---|---|
| | | CORN (TOP) | PIG WEED | VELVET LEAF | GIANT FOXTAIL | MORNING GLORY | AVE* CON |
| EL-177 | 0.09 | 0 | 80 | 25 | 25 | 0 | 33 |
| | 0.125 | 0 | 85 | 73 | 10 | 38 | 52 |
| | 0.25 | 10 | 100 | 99 | 40 | 78 | 79 |
| | 0.38 | 10 | 100 | 100 | 70 | 72 | 86 |
| alachlor | 0.05 | 0 | 98 | 25 | 93 | 48 | 66 |
| | 0.1 | 5 | 99 | 25 | 98 | 50 | 68 |
| | 0.2 | 0 | 100 | 10 | 99 | 0 | 52 |
| | 0.4 | 15 | 100 | 25 | 100 | 60 | 71 |
| cyanazine | 0.1 | 10 | 95 | 0 | 30 | 40 | 41 |
| | 0.15 | 10 | 0 | 40 | 10 | 40 | 23 |
| | 0.2 | 20 | 30 | 10 | 15 | 0 | 14 |
| | 0.4 | 0 | 40 | 30 | 30 | 40 | 35 |
| | 0.8 | 0 | 60 | 48 | 25 | 0 | 33 |
| EL-177 + | 0.09 + 0.1 | 0 | 100 | 88 | 98 | 0 | 72 |
| alachlor | 0.125 + 0.1 | 5 | 100 | 73 | 97 | 75 | 86 |

EP 0 331 495 A1

TABLE III continued

Experiment 46587003

| TREATMENT | RATE LB/A | | | % - INJURY | | | | | |
|---|---|---|---|---|---|---|---|---|---|
| | | | | CORN (TOP) | PIG WEED | VELVET LEAF | GIANT FOXTAIL | MORNING GLORY | AVE* CON |
| EL-177 + | 0.09 | + 0.1 | | 0 | 90 | 63 | 0 | 73 | 57 |
| cyanazine | 0.09 | + 0.15 | | 10 | 99 | 64 | 0 | 52 | 54 |
| | 0.09 | + 0.2 | | 0 | 99 | 100 | 15 | 80 | 74 |
| | 0.125 | + 0.1 | | 10 | 100 | 98 | 10 | 70 | 70 |
| | 0.125 | + 0.15 | | 10 | 99 | 98 | 20 | 90 | 77 |
| | 0.125 | + 0.2 | | 5 | 100 | 99 | 15 | 15 | 57 |
| EL-177 + | 0.09 | + 0.05 | + 0.1 | 0 | 100 | 99 | 70 | 87 | 93 |
| alachlor + | 0.09 | + 0.1 | + 0.1 | 0 | 100 | 99 | 99 | 73 | 93 |
| cyanazine | 0.09 | + 0.05 | + 0.15 | 0 | 100 | 96 | 83 | 70 | 87 |
| | 0.09 | + 0.1 | + 0.15 | 10 | 100 | 95 | 99 | 85 | 95 |
| | 0.09 | + 0.05 | + 0.2 | 5 | 100 | 94 | 90 | 93 | 94 |
| | 0.09 | + 0.1 | + 0.2 | 10 | 100 | 95 | 94 | 45 | 83 |
| | 0.125 | + 0.05 | + 0.1 | 0 | 100 | 94 | 60 | 88 | 86 |
| | 0.125 | + 0.1 | + 0.1 | 10 | 100 | 99 | 97 | 83 | 95 |
| | 0.125 | + 0.05 | + 0.15 | 0 | 100 | 100 | 83 | 64 | 87 |
| | 0.125 | + 0.1 | + 0.15 | 0 | 100 | 99 | 95 | 58 | 88 |
| | 0.125 | + 0.05 | + 0.2 | 5 | 100 | 100 | 93 | 70 | 91 |
| | 0.125 | + 0.1 | + 0.2 | 10 | 100 | 97 | 95 | 30 | 81 |
| | 0.25 | + 0.2 | + 0.4 | 18 | 100 | 100 | 100 | 100 | 100 |
| | 0.38 | + 0.4 | + 0.8 | 18 | 100 | 100 | 100 | 100 | 100 |

TABLE III continued

Experiment 46587003

| TREATMENT | RATE LB/A | % - INJURY | | | | | |
|---|---|---|---|---|---|---|---|
| | | CORN (TOP) | PIG WEED | VELVET LEAF | GIANT FOXTAIL | MORNING GLORY | AVE* CON |
| EL-177 + | 0.09 + 0.1 + 0.38 | 0 | 100 | 90 | 98 | 59 | 87 |
| alachlor + | 0.125 + 0.1 + 0.38 | 10 | 100 | 99 | 99 | 85 | 96 |
| atrazine | | | | | | | |

Notes  (1)  Data is average of two replications
       (2)  Applications top watered through two days after emergence (approx 1" water) then
            subirrigated as needed
       (3)  Greenhouse mineral soil mix used
        *   Average weed control across the four species (pigweed, velvetleaf, foxtail millet,
            and morningglory)
        -   Not evaluated

In addition to these greenhouse tests, combinations of the present invention were also evaluated in field experiments at eighteen locations throughout the corn belt. In these experiments, commercial formulations of atrazine, cyanazine, and alachlor were employed. EL-177 was formulated as a 80 WP, with the following composition:

| | |
|---|---|
| EL-177 (@ 97% purity) | 82.47% |
| Polyfon H (Sugar-free sodium-based sulfonates of Kraft lignin from Westvaco Chemicals Div.) | 3.50% |
| Sellogen HR (sodium dialkylnaphthalene sulfonate from Diamond Shamrock Chemicals Co.) | 5.00% |
| Stepanol ME Dry (sodium lauryl sulfate from Stepan Co.) | 1.00% |
| Gum Arabic | 0.50% |
| Hi-Sil 233 (hydrated amorphous silicas from Pittsburg Plate Glass Co. Chemical Division) | 2.50% |
| Borden Clay (hydrous aluminum silicates from J.M. Huber Corp.) | 5.03% |
| | 100.00% |

To make this wettable power formulation, the ingredients were mixed and air milled together. Some of this material was granulated in a mini tumbler with a pan, to achieve a dry flowable ("DF") formulation with the same composition. Both formulations were used in carrying out these field experiments.

To achieve a specific treatment, the relevant formulations were tank mixed and applied preemergently with conventional spray equipment. Crop injury and weed control were evaluated, generally twice, at an "early" time (less than about 50 days post application) and at a "late" time (up to 148 days post application).

To evaluate the role of adequate rainfall, the results were summarized, and are reported below, in two separate tables. Table IV presents a summary of the data for those experiments receiving adequate rain immediately after application of the present combinations. Table V presents a summary of the data for those experiments receiving inadequate rain after application of the combination.

## TABLE IV
## Summary of Experiments Receiving Adequate Rain

| TREATMENT | RATE LB/A | AVERAGE PERCENT WEED CONTROL EARLY | LATE |
|---|---|---|---|
| EL-177 | 0.25 | 68 | 60 |
| EL-177 + atrazine | 0.25 + 1.25 | 94 | 92 |
| EL-177 + alachlor | 0.25 + 1 | 88 | 86 |
| atrazine + alachlor | 2 + 2.5 | 98 | 97 |
| EL-177 + atrazine + alachlor | 0.25 + 1 + 1.25 | 97 | 95 |

Note:
(1)  Percent weed control calculated across 18 experiments that received sufficient rainfall for activation.
(2)  Percent weed control includes 56 observations for early season; and 49 observations for late season. Observations include all weed species found commonly in the various treatment plots at each location.
(3)  Percent weed control is calculated on an average of all weed species.
(4)  In one (out of 18 experiments) experiment, the three-way combination provided weed control less than that provided by the atrazine + alachlor combination.
(5)  Distribution of weed species was as follows: Giant Foxtail = 15 locations; Shattercane = 2 locations; Fall Panicum = 1 location; Seedling Johnson Grass = 1 location; Velvetleaf = 12 locations; Pigweed = 8 locations; Cocklebur = 4 locations; Ivyleaf Morningglory = 4 locations; Lambsquarters = 3 locations; Venice Mallow = 2 locations; Sunflower, Black Nightshade, Ragweed, Jimsonweed, Smartweed, Tall Morningglory, and Buffalowbur = all 1 location each.

TABLE V

Summary of Experiments Receiving Inadequate
Rain

| TREATMENT | RATE LB/A | AVERAGE PERCENT WEED CONTROL (EARLY) |
|---|---|---|
| EL-177 | 0.25 | 30 |
| EL-177 + atrazine | 0.25 + 1.25 | 59 |
| EL-177 + alachlor | 0.25 + 1 | 50 |
| atrazine + alachlor | 2 + 2.5 | 58 |
| EL-177 + atrazine + alachlor | 0.25 + 1 + 1.25 | 60 |

(1) Percent weed control calculated across four experiments that received insufficient rainfall for activation.

(2) Percent weed control includes 12 observations for early season. Observations include all weed species found commonly in the various treatment plots at each location.

(3) Percent weed control is calculated on an average of all weed species.

Claims

1. A method of obtaining weed control which comprises applying approximately simultaneously to a weed (1) a first substance which is 5-cyano-1-(1,1-dimethylethyl)-N-methyl-1H-pyrazole-4-carboxamide, (2) a second substance which is atrazine or cyanazine, and (3) a third substance which is alachlor or metolachlor.

2. The method of Claim 1 in which the second substance is atrazine.

3. The method of Claim 1 or 2 in which the third substance is metolachlor.

4. The method of Claim 1 or 2 in which the third substance is alachlor.

5. A method of obtaining weed control in a corn field which comprises applying to the field, preemergently, a composition comprising (1) a first component which is 5-cyano-1-(1,1-dimethylethyl)-N-methyl-1H-pyrazole-4-carboxamide, (2) a second component which is atrazine or cyanazine, and (3) a third component which is alachlor or metolachlor.

6. The method of Claim 5 in which the second component is atrazine and the third component is alachlor.

7. The method of Claim 5 in which the application is at the rate of 0.1 to 0.5 lb./acre of the first component, 0.25 to 1.5 lbs./acre of the second component, and 0.1 to 1.5 lbs./acre of the third component.

8. A herbicidal composition comprising (1) from 0.5 to 12% of a first component which is 5-cyano-1-(1,1-dimethylethyl)-N-methyl-1H-pyrazole-4-carboxamide, (2) from 0.15 to 36% of a second component which is atrazine or cyanazine, and (3) from 0.15 to 36% of a third component which is alachlor or metolachlor.

9. The composition of Claim 8 in which the second component is atrazine and the third component is alachlor.

10. The composition of Claim 8 in which the second component is atrazine and the third component is metolachlor.

16

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,A | C.R. WORTHING et al.: "Pesticide manual", 7th edition, 1983, pages 3,23,140,377, British Crop Protection Council, Croydon, GB <br> * "Formulations sections" * <br> --- | 1-10 | A 01 N 43/70 // <br> (A 01 N 43/70 <br> A 01 N 43:56 <br> A 01 N 37:26 <br> A 01 N 37:22 ) |
| D,A | US-A-4 589 905 (J.R. BECK) <br> * Column 25, line 50 - column 27, line 49; column 29, lines 6-17; claims 1,13-15,19,29,30,32,33,43-45 * <br> --- | 1-10 | |
| A | RESEARCH DISCLOSURE, no. 197, September 1980, page 369, abstract no. 19715, Havant, Hampshire, GB; "Herbicide mixtures" <br> --- | 1-10 | |
| A | PROCEEDINGS EUROPEAN WEED RESEARCH SOCIETY SYMPOSIUM STATUS, BIOLOGY AND CONTROL OF GRASSWEEDS IN EUROPE, 1975, pages 162-169; R. LOZANOVSKI et al.: "The evaluation of glyphosate and alachlor + atrazine programmes for sorghum halepense L. pers control on stubbles and corn" <br> * Page 165, lines 1-41; tables 1-4 * <br> --- | 1-10 | TECHNICAL FIELDS SEARCHED (Int. Cl.4) <br><br> A 01 N |
| A | AT-B- 380 623 (CHEMIE LINZ) <br> * Page 1, line 33 - page 2, line 16; page 3, line 50 - page 4, line 8; claims * <br> ----- | 1-10 | |

The present search report has been drawn up for all claims

| Place of search | Date of completion of the search | Examiner |
|---|---|---|
| THE HAGUE | 14-06-1989 | FLETCHER A.S. |

EPO FORM 1503 03.82 (P0401)